# EUROPÄISCHE PATENTSCHRIFT

(11) **EP 2 276 604 B1**
(45) Veröffentlichungstag und Bekanntmachung des Hinweises auf die Patenterteilung: **20.03.2013**
(21) Anmeldenummer: 09726482.4
(22) Anmeldetag: 31.03.2009
(51) Int. Cl.: B23K 26/38

(54) **VERFAHREN ZUR OPTIMIERUNG DER BELEGUNG EINES ROHRS ODER MEHRERER ROHRE MIT MEHREREN ZU SCHNEIDENDEN ROHRTEILEN FÜR EINE BEARBEITUNGSANLAGE**
METHOD FOR OPTIMIZING THE OCCUPANCY OF A PIPE OR SEVERAL PIPES WITH SEVERAL PIPE PARTS TO BE CUT FOR A MACHINING INSTALLATION
PROCÉDÉ D'OPTIMISATION DU FRACTIONNEMENT D'UN OU PLUSIEURS TUBES EN PARTIES TUBULAIRES À DÉCOUPER POUR UN DISPOSITIF D'USINAGE

(30) Priorität: 31.03.2008 DE 102008016734
(43) Veröffentlichungstag der Anmeldung: 26.01.2011
(73) Patentinhaber: TRUMPF Werkzeugmaschinen GmbH + Co. KG, 71254 Ditzingen (DE)
(72) Erfinder: BECKER, Michael, 98716 Geraberg (DE); SCHLEGEL, Rainer, 72459 Albstadt (DE)
(74) Vertreter: Rank, Christoph
(86) Internationale Anmeldenummer: PCT/DE2009/000412
(87) Internationale Veröffentlichungsnummer: WO 2009/121335

(56) Entgegenhaltungen:
- EP-A- 0 871 100
- EP-A- 1 366 846
- WO-A-02/072304

## Beschreibung

Die vorliegende Erfindung betrifft ein Verfahren zur Optimierung der Belegung eines Rohrs oder mehrerer Rohre mit mehreren zu schneidenden Rohrteilen für eine Bearbeitungsanlage, insbesondere für eine Laserschneidanlage, wobei die zu schneidenden Rohrteile aus einer Auftragstabelle ausgewählt werden, sowie ein zum Durchführen des Optimierungsverfahrens angepasstes Computerprogrammprodukt.

Unter einem Rohr wird im Rahmen dieser Anmeldung ein länglicher Körper verstanden, dessen Länge in der Regel wesentlich größer als sein Querschnitt ist und der aus einem im Wesentlichen unflexiblen Material gefertigt ist. Rohre können eine beliebige offene oder geschlossene Querschnittsform aufweisen, wobei Rund- und Rechteckrohre die gebräuchlichsten Rohre darstellen. Rohrförmige Bauteile, die aus Rohren durch Laserschneiden hergestellt werden, werden im Rahmen dieser Anmeldung als Rohrteile bezeichnet.

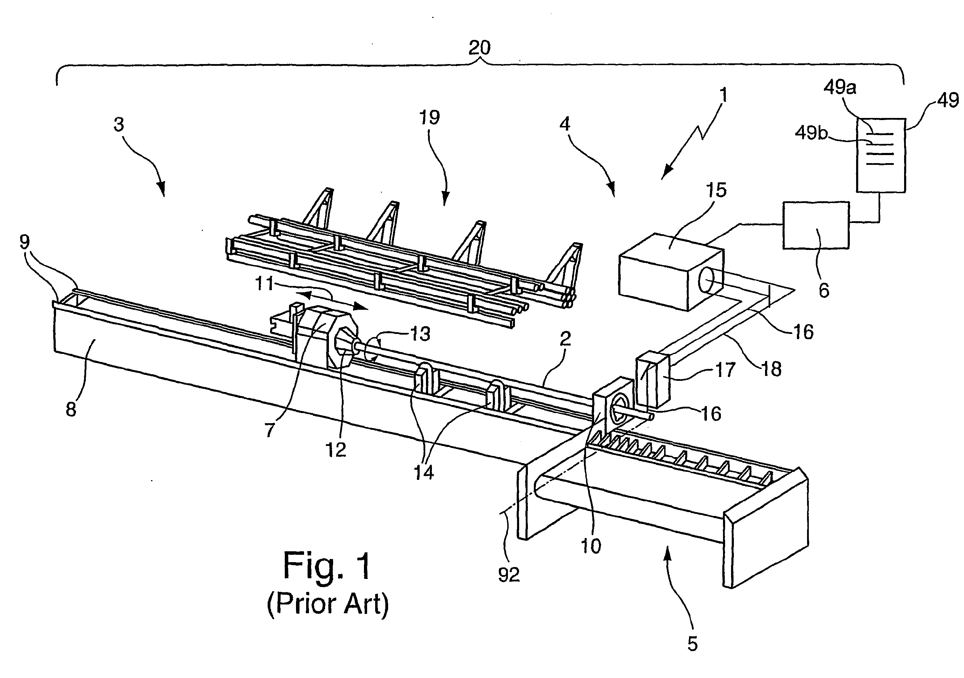

**Fig. 1** zeigt eine als ""TruLaser Tube" bekannte Bearbeitungsanlage **1** zum Laserschneiden von Rohren **2**, die als Laserschneidanlage bezeichnet wird und zur Bearbeitung von Rohren mit einer beliebigen Querschnittsform ausgebildet ist. Die gezeigte Laserschneidanlage 1 umfasst eine Zuführvorrichtung **3** zur seitlichen Zufuhr eines zu schneidenden Rohrs 2 zu der Laserschneidanlage 1, eine Beärbeitungsvorrichtung **4** zum Laserschneiden von Rohrteilen aus dem Rohr 2 und eine Entladevorrichtung **5** zum Entladen der geschnittenen Rohrteile aus der Laserschneidanlage 1. Alle wesentlichen Funktionen der Laserschneidanlage 1 werden mittels einer numerischen Steuerungsvorrichtung **6** gesteuert.

Die Zuführvorrichtung 3 umfasst eine als Werkstück-Bewegungseinrichtung dienende Dreh- und Vorschubeinrichtung **7** sowie ein Maschinenbett **8** mit Führungsschienen **9** und eine Durchschiebeeinrichtung **10**. Die Dreh- und Vorschubeinrichtung 7 ist motorisch angetrieben in Vorschubrichtung **11** auf den Führungsschienen 9 verfahrbar. An der einem zuzuführenden Rohr 2 zugewandten Seite weist die Dreh- und Vorschubeinrichtung 7 eine Spanneinrichtung **12** auf, die in Richtung einer Drehachse **13** gesteuert drehbar ist und das zugeführte Rohr 2 von außen umfasst und ortsfest klemmt. Das zugeführte Rohr 2 wird von einer in das Maschinenbett 8 integrierten Werkstückabstützung **14** abgestützt. Im Bereich der Bearbeitungsvorrichtung 4 wird das Rohr 2 durch die Durchschiebeeinrichtung 10 geführt. Die Durchschiebeeinrichtung 10 ist so ausgelegt, dass das eingespannte Rohr 2 in Vorschubrichtung 11 geführt und nicht ortsfest geklemmt ist. Das Rohr 2 ist in der Durchschiebeeinrichtung 10 um die Drehachse 13 drehbar.

Die Bearbeitungsvorrichtung 4 umfasst eine Laserstrahlquelle **15** zum Erzeugen eines Laserstrahls **16**, einen Bearbeitungskopf **17** und eine Strahlführung **18**, die den Laserstrahl 16 von der Laserstrahlquelle 15 zum Bearbeitungskopf 17 führt. Der Laserstrahl 16 tritt aus dem Bearbeitungskopf 17 aus und wird auf die Außenumfangsfläche des eingespannten Rohrs 2 fokussiert. Auf der dem Maschinenbett 8 abgewandten Seite der Durchschiebeeinrichtung 10 ist die Entladevorrichtung 5 vorgesehen, die die aus dem Rohr 2 geschnittenen Rohrteile sowie das Restrohr aus der Laserschneidanlage 1 abführt.

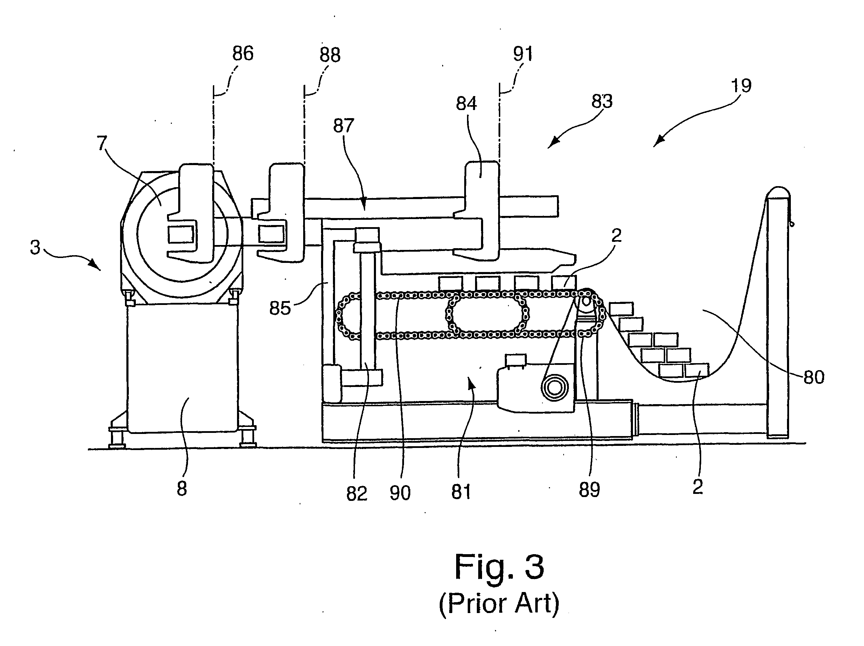

Um die Produktivität der Laserschneidanlage 1 zu erhöhen, weist die in Fig. 1 gezeigte Laserschneidanlage 1 eine Beladevorrichtung **19** als Automatisierungskomponerite auf, mit der ein Rohr 2 automatisch in eine Übergabeposition **86** (Fig. 3) befördert und an die Zuführvorrichtung 3 der Laserschneidanlage 1 übergeben wird. Die maschinelle Anordnung aus Laserschneidanlage 1 und der Beladevorrichtung 19 wird als Fertigungszelle **20** (Flexible Manufacturing Cell, abgekürzt FMC) bezeichnet.

Wenn das über die Beladevorrichtung 19 zugeführte Rohr 2 in der Übergabeposition 86 angeordnet ist, befindet sich die Dreh- und Vorschubeinrichtung 7 zunächst in einer bearbeitungskopffernen Ausgangsstellung. Zur Rohrbearbeitung verfährt die Dreh- und Vorschubeinrichtung 7 aus ihrer Position mit geöffneter Spanneinrichtung 12 so weit in Richtung auf das zugeführte Rohr 2 zu, bis das dem Bearbeitungskopf 17 abgewandte Ende des Rohrs 2 innerhalb der Spanneinrichtung 12 zu liegen kommt. Die Spanneinrichtung 12 wird geschlossen und dadurch das Rohr 2 an der Dreh- und Vorschubeinrichtung 7 ortsfest geklemmt. Die Dreh- und Vorschubeinrichtung 7 und das Rohr 2 bewegen sich gemeinsam in Richtung auf den Bearbeitungskopf 17. Dabei läuft das Rohr 2 mit seinem dem Bearbeitungskopf 17 zugewandten Ende zunächst in die Durchschiebeeinrichtung 10 ein und wird in Vorschubrichtung 11 durch die Durchschiebeeinrichtung 10 hindurch bewegt, wobei das Rohr 2 in der Durchschiebeeinrichtung 10 um die Drehachse 13 drehbar ist. Das Rohr 2 wird durch die Verfahrbewegung der Dreh- und Vorschubeinrichtung 7 in Vorschubrichtung 11 gegenüber dem Bearbeitungskopf 17 in die gewünschte Bearbeitungsposition **92** zugesteilt.

Die Steuerung von Bearbeitungsanlagen erfolgt mit Hilfe numerischer Steuerungen, die auch als NC-Steuerungen bezeichnet werden, wobei NC als Abkürzung für den englischen Begriff "Numerical Control" steht. Festverdrahtete NC-Steuerungen wurden seit Anfang der 1970er Jahre durch computergesteuerte NC-Steuerungen, die als CNC-Steuerungen (Computerized Numerical Control) bezeichnet werden, ersetzt. Moderne NC-Steuerungen basieren ausschließlich auf Mikroprozessortechnik, so dass die Begriffe NC-Steuerung und CNC-Steuerung praktisch synonym verwendet werden. Ein wesentlicher Vorteil von NC-Steuerungen auf Mikroprozessortechnik besteht darin, dass einheitliche und in großen Stückzahlen vorhandene Hardwarekomponenten durch Implementierung unterschiedlicher Softwarekomponenten an spezielle Bearbeitungsanlagen und Fertigungsaufgaben angepasst werden können. Der aktuelle Stand moderner NC-Steuerungen ist bspw. im Lehrbuch von Manfred Weck, Werkzeugmaschinen Fertigungssysteme, Band 4 "Automatisierung von Maschinen und Anlagen", Springer-Verlag beschrieben.

NC-Steuerungen werden im Allgemeinen in drei Steuereinheiten aufgeteilt:
■ MMC-Steuereinheit (Man Machine Communication) als Dateneingabe- und Visualisierungseinheit
■ Anpass-Steuereinheit als zentrale Steuereinheit, die auch als SPS oder PLC bezeichnet wird, wobei SPS als Abkürzung für den Begriff speicherprogrammierbare Steuerung steht, der im Englischen als Programmable Logic Controller, abgekürzt PLC, bezeichnet wird
■ NC-Steuereinheit

Über die MMC-Steuereinheit eingegebene Daten bzw. Steuerbefehle werden in der NC-Steuereinheit decodiert und nach geometrischen Daten, technologischen Daten und Schaltfunktionen getrennt weiter verarbeitet. Geometrische Daten beinhalten bspw. Weginformationen über die zu verfahrenden Werkzeug- und Werkstückwege (Bearbeitungskopf- und Rohrbewegung), während technologische Daten bspw. Bearbeitungsparameter, wie Vorschubgeschwindigkeit und Laserstrahlleistung beinhalten. Schaltbefehle steuern bspw. Werkzeugwechsel, Teilebeschickung (Rohr beladen) und Teileentnahme (Rohrteil entladen). Schaltbefehle werden an die SPS-Steuereinheit weitergegeben, wo sie mit von der Bearbeitungsanlage kommenden Rückmeldungen verknüpft und nach Maßgabe des schrittweise abgearbeiteten Steuerprogramms in Steuerbefehle für die zu schaltenden Aggregate umgesetzt werden. Die geometrischen und technologischen Daten erzeugen nach Aufruf durch die NC-Steuereinheit entsprechende Achsbewegungsbefehle für die Bearbeitungsanlage. Die NC- und SPS-Steuereinheiten übermitteln den aktuellen Maschinenstatus zur Visualisierung an die MMC-Steuereinheit.

Die drei Steuereinheiten, MMC-, SPS- und NC-Steuereinheit, wurden früher wegen begrenzter Prozessorleistung als separate Prozessoren (Mehrprozessortechnik) realisiert. Moderne Prozessoren sind so leistungsfähig, dass auch ein einzelner Prozessor (sogenannte Einprozessortechnik) die erforderlichen Leistungen zur Verfügung stellen kann. Bei NC-Steuerungen mit Einprozessortechnik findet eine Trennung der MMC-, SPS- und NC-Steuereinheiten nur noch auf Softwareebene statt.

Zur Steuerung einer Bearbeitungsanlage benötigt die NC-Steuerung ein geeignetes Steuerprogramm, das auch als NC-Programm bezeichnet wird. Jede Anweisung an eine Bearbeitungsanlage wird - codiert nach DIN-Code - in Form von sogenannten Funktionen ausgedrückt. Grundlegende Funktionen, die für jedes Bearbeitungsverfahren gebraucht werden, sind in internationalen Richtlinien, speziell in der DIN-Norm 66025, festgeschrieben. Zu den grundlegenden Funktionen gehören Verfahrinformationen zu einer definierten Position, geometrische Informationen, die den Konturverlauf eines Teils (Blechteil, Rohrteil) beschreiben, und technologische Informationen für die Fertigung der Kontur (z.B. Laserschneiden). Neben den grundlegenden Funktionen, die im DIN-Code definiert sind, entwickeln Maschinenhersteller spezielle NC-Funktionen für ihre Bearbeitungsanlagen und die zugehörigen Bearbeitungsverfahren. Beim Laserschneiden von Rohren sind bspw. für verschiedene Wandstärken unterschiedliche Einstechmethoden notwendig, die jeweils über eine eigene NC-Funktion aufgerufen werden können.

Um NC-Programme automatisch zu erstellen, entwickelten Maschinenhersteller und Softwareunternehmen sogenannte Programmiersysteme. Programmiersysteme kennen die grundlegenden und speziellen NC-Funktionen und wissen, welche Technologiedaten benötigt werden und welche Regeln für die Bearbeitung gelten.

Damit können sie die Bearbeitung automatisch definieren und ein NC-Programm generieren. Spezielle NC-Funktionen werden im Programmiersystem hinterlegt und dokumentiert, so dass ein Programmierer eine NC-Funktion nutzen kann, ohne ihren DIN-Code zu kennen. Ein Programmierer benötigt heute selbst keine klassischen Programmierkenntnisse, sein Expertenwissen besteht vielmehr darin, die optimalen Bearbeitungsparameter und Bearbeitungsstrategien zu finden.

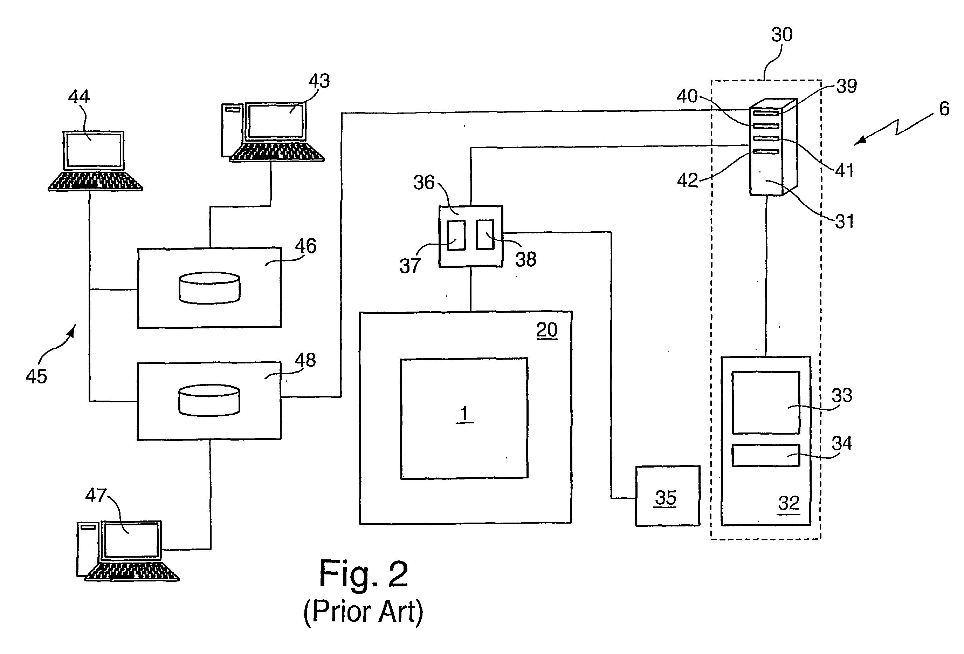

**Fig. 2** zeigt die numerische Steuerungsvorrichtung 6 der Laserschneidanlage 1 von Fig. 1, die sämtliche Hardware- und Softwarekomponenten umfasst, die zur Steuerung der Laserschneidanlage 1 und der Fertigungszelle 20 dienen.

Die Steuerungsvorrichtung 6 umfasst hardwareseitig eine MMC-Steuereinheit 30 mit einem bspw. als Industrie-PC ausgebildeten Steuerungscomputer **31** und einer Bedieneinrichtung **32** mit einem Bildschirm **33** als Anzeigeeinheit und einer Tastatur **34** als Eingabeeinheit, sowie eine Maschinensteuertafel **35** zur manuellen Bedienung der Laserschneidanlage 1 und der Fertigungszelle 20 und eine NCU-Baugruppe **36** (Numerical Control Unit) mit integrierter NC-Steuereinheit **37** und SPS-Steuereinheit **38**. Alle Hardwarekomponenten der Steuerungsvorrichtung 6 sind über ein Bussystem (nicht gezeigt) miteinander vernetzt, an das weitere Steuerungskomponenten angeschlossen werden können. Die MMC-Steuereinheit 30 und die NCU-Baugruppe 36 mit NC- und SPS-Steuereinheiten 37, 38 sind im Ausführungsbeispiel als zwei separate Komponenten ausgebildet. Alternativ können die MMC-, NC- und SPS-Steuereinheiten 30, 37, 38 als drei separate Komponenten oder in Einprozessortechnik als ein gemeinsamer Prozessor ausgebildet sein. Der Steuerungscomputer 31 und die NCU-Baugruppe 36 können in einem zu der Laserschneidanlage 1 zugehörigen Schaltschrank (nicht gezeigt) angeordnet sein.

Die Steuerungsvorrichtung 6 umfasst softwareseitig eine Bediensoftware zur Steuerung der Automatisierungskomponenten (Beladevorrichtung 19) sowie Softwaremodule zur Auftragsvenrvaltung, Werkzeugverwaltung und Palettenverwaltung umfassen, die als Bediensoftware **39** für die Fertigungszelle (Fertigungszellen-Bediensoftware, FMC-Software) zusammengefasst werden. Auf dem Steuerungscomputer 31 sind neben der FMC-Software 39 für die Fertigungszelle eine Bediensoftware **40** für die Laserschneidanlage (Maschinen-Bediensoftware, MMC-Software), eine Programmverwaltung **41** zur Verwaltung der NC-Programme und ggf. weitere Anwendungen, wie bspw. ein Programmiersystem **42**, installiert.

Um ein NC-Programm für ein zu schneidendes Rohrteil, das als NC-Teileprogramm bezeichnet wird, in einem Programmiersystem erstellen zu können, benötigt der Programmierer eine Konstruktionszeichnung des Rohrteils, die in das Programmiersystem geladen wird. Die Konstruktion eines Rohrteils erfolgt mit Hilfe eines Konstruktionssystems **43** (CAD-System) oder eines kombinierten Konstruktions- und Programmiersystems **44** (CAD-/CAM-System), wobei die Abkürzungen CAD und CAM für Computer Aided Design und Computer Aided Manufacturing stehen. Fertige Konstruktionszeichnungen werden auf einer dafür in einem Netzwerk **45** vorgesehenen gemeinsamen CAD-Datenablage **46** abgelegt, auf die die Programmierer bei Bedarf zugreifen können.

Ein NC-Teileprogramm zum Laserschneiden eines Rohrteils kann auf zwei unterschiedliche Arten erstellt werden. Im ersten Fall wird das NC-Teileprogramm in der Arbeitsvorbereitung mit Hilfe eines Programmiersystems erstellt und an die Steuerungsvorrichtung 6 übertragen. Bereits eingelesene NC-Teileprogramme können über die Bedieneinrichtung 32 nachträglich verändert oder korrigiert werden. Im zweiten Fall erstellt der Maschinenbediener das NC-Teileprogramm manuell an der Bedieneinrichtung 32 der MMC-Steuereinheit 30. Bei dem in Fig. 2 gezeigten Ausführungsbeispiel sind neben dem Programmiersystem 42 auf dem Steuerungscomputer 31 weitere Programmiersysteme im Netzwerk 45 in Form eines kombinierten Konstruktions- und Programmiersystems 44 (CAD-/CAM-System) und eines reinen Programmiersystems **47** (CAM-System) installiert. Der Steuerungscomputer 31 und die Programmiersysteme 42, 44, 47 sind mit einer CAM-Datenablage **48** verbunden, auf die die Programmierer und Maschinenbediener zugreifen können. Der Programmierer legt die fertigen NC-Teileprogramme in der CAM-Datenablage 48 ab. Der Maschinenbediener kann auf die CAM-Datenablage 48 zugreifen und die NC-Teileprogramme aus der CAM-Datenablage 48 in die Programmverwaltung 41 des Steuerungscomputers 31 importieren. Der Datentransfer der NC-Teileprogramme in die Programmverwaltung 41 kann auch über ein Speichermedium wie eine CD-ROM oder einen USB-Stick erfolgen, so dass auch NC-Teileprogramme in die Programmverwaltung 41 importiert werden können, die nicht in der CAM-Datenablage 48 abgelegt sind.

Um ein Rohrteil auf der Laserschneidanlage 1 herzustellen, erstellt der Maschinenbediener in der FMC-Software 39 eine in Fig. 1 schematisch angedeutete Auftragstabelle **49**, in der für jedes Rohrteil ein Teileauftrag **49a, 49b** angelegt wird, in dem neben dem Programmnamen des zugehörigen NC-Teileprogramms die Stückzahl des Rohrteils angegeben ist. Den Teileaufträgen 49a, 49b wird beim Anlegen ein Status "gesperrt" oder "frei" zugeordnet. Auf der Laserschneidanlage 1 werden nur freigegebene Teileaufträge bearbeitet, also Teileaufträge, die den Status "frei" aufweisen. Gesperrte Teileaufträge, also Teileaufträge, die den Status "gesperrt" aufweisen, können nicht bearbeitet werden und werden bei der automatischen Rohrbelegung daher nicht berücksichtigt. Die FMC-Software 39 zeigt in der Auftragstabelle 49 den Status "aktiv" an, wenn ein freigegebener Teileauftrag an der Laserschneidanlage 1 bearbeitet wird. Ein Teileauftrag, der ordnungsgemäß abgearbeitet wurde, weist in der Auftragstabelle 49 den Status "beendet" auf.

**Fig. 3** zeigt die Beladevorrichtung 19 der Laserschneidanlage 1 von Fig. 1. Die Beladevorrichtung 19 umfasst eine Bündelmulde **80** zur Aufnahme von Rohren 2, eine Vereinzelungseinrichtung **81** zum Vereinzeln der Rohre 2 aus der Bündelmulde 80, eine Aushebeeinrichtung **82** zum Anheben eines vereinzelten Rohrs und eine Übergabeeinrichtung **83** mit Greifern **84** zur Übergabe des Rohrs 2 an die Zuführvorrichtung 3 der Laserschneidanlage 1. Da bei Rohren Längenunterschiede von mehreren Zentimetern auftreten, weist die Beladevorrichtung 19 außerdem eine Messeinrichtung **85** zur Längenmessung der Rohre auf. Die Längenmessung ist notwendig, um die X-Position (Position in Vorschubrichtung 11) der Übergabeposition 86 des Rohrs an die Dreh- und Vorschubeinrichtung 7 zu ermitteln.

Während der Bearbeitung eines Rohrs auf der Laserschneidanlage 1 bzw. während des Entladens des Restrohrs wird der Beladevorgang des nächsten Rohrs vorbereitet. Der Vorgang "Beladen vorbereiten" umfasst die Verfahrenschritte, die notwendig sind, um ein Rohr 2 aus der Bündelmulde 80 über eine Messposition **87** in eine Warteposition **88** zu befördern. Das Fördern und Vermessen der Rohre erfolgt hauptzeitparallel bis zum Erreichen der Warteposition 88.

In der Bündelmulde 80 befinden sich mehrere Rohre 2, die für die Bearbeitung auf der Laserschneidanlage 1 vorgesehen sind. Die Übergabe der Rohre 2 aus der Bündelmulde 80 an die Vereinzelungseinrichtung 81 erfolgt automatisch. Die Vereinzelungseinrichtung 81 weist im Ausführungsbeispiel eine erste Förderstrecke als Staustrecke **89** und eine zweite Förderstrecke als Vereinzelungsstrecke **90** auf. Die Staustrecke 89 und die Vereinzelungsstrecke 90 bestehen aus motorisch angetriebenen Förderketten, die parallel zueinander verlaufen und sich überschneiden. Die auf der Staustrecke 89 liegenden Rohre 2 werden an die Vereinzelungsstrecke 90 übergeben. Durch eine höhere Fördergeschwindigkeit der Vereinzelungsstrecke 90 gegenüber der Staustrecke 89 wird ein Auseinanderziehen und damit ein Vereinzeln der Rohre 2 erreicht.

Am Ende der Vereinzelungsstrecke 90 befindet sich die Aushebeeinrichtung 82 zum Anheben eines einzelnen Rohrs 2 in die Messposition 87, in der mittels der Messeinrichtung 85 eine Längenmessung des Rohrs 2 erfolgt. Die Längenmessung erfolgt automatisch über das Verfahren eines mit einem Drucksensor versehenen Zahnriemenantriebs gegen einen elektrisch erfassten Schalter. Der Messwert für die Rohrlänge wird von der Messeinrichtung 85 an die Steuerungsvorrichtung 6 der Laserschneidanlage 1 übermittelt. Die Greifer 84 der Übergabeeinrichtung 83 fahren aus einer Grundposition **91** in die Messposition 87, übernehmen das Rohr 2 nach erfolgter Längenmessung und fahren mit dem Rohr 2 in die Warteposition 88, in der sie bis zur Freigabe des Beladevorgangs verbleiben. Sobald die Greifer 84 mit dem Rohr 2 in der Warteposition 88 angeordnet sind, ist der Vorgang "Beladen vorbereiten" beendet.

Nach Freigabe des Beladevorgangs fahren die Greifer 84 in die Übergabeposition 86, in der das vermessene Rohr von den Greifern 84 an die Dreh- und Vorschubeinrichtung 7 übergeben wird. Wenn das Rohr 2 in der Übergabeposition 86 angeordnet ist, wird es von der Spanneinrichtung 12 der heranfahrenden Dreh- und Vorschubeinrichtung 7 gespannt. Die Greifer 84 fahren in ihre Grundposition 91 zurück. Der Beladevorgang ist beendet und auf dem Bildschirm 33 der MMC-Steuereinheit 30 erscheint die Meldung "Rohrbeladen beendet".

Bei der bekannten Laserschneidanlage 1 gemäß Fig. 1 wird die Rohrbelegung mit mehreren zu schneidenden Rohrteilen entweder im zugehörigen Programmiersystem 42, 44, 47 oder in der FMC-Software 39 des Steuerungscomputers 31 erstellt.

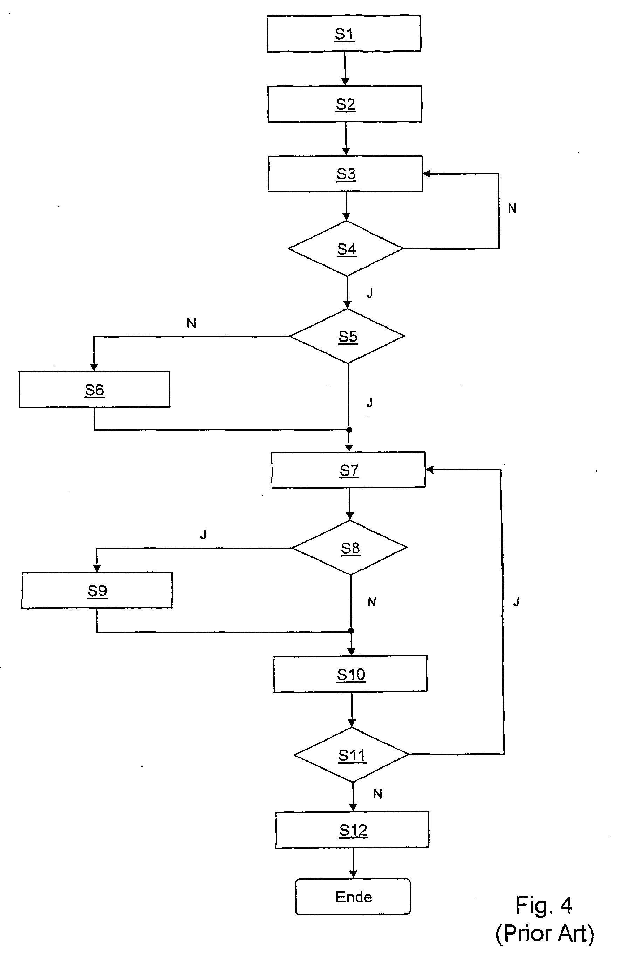

Das von der bekannten Laserschneidanlage "TruLaser Tube" 1 verwendete Programmiersystem "TruToPs Tube" umfasst als Option ein Schachtelmodul "TubeLink" zum Optimieren der Belegung eines Rohrs mit mehreren zu schneidenden Rohrteilen. **Fig. 4** zeigt in Form eines Ablaufdiagramms die einzelnen Verfahrensschritte des aus TubeLink bekannten Verfahrens zur Optimierung der Rohrbelegung. In einem ersten Schritt **S1** legt der Programmierer die Schachteloptionen fest, wobei er die Mindestrohrlänge der zu schneidenden Rohre, den Abstand zwischen den Rohrteilen und die Länge des nicht bearbeitbaren Rohrstücks im Totbereich der Spanneinrichtung 12 als "minimale Restlänge" angibt. In einem zweiten Schritt **S2** erstellt der Programmierer ein neues Produktionspaket oder öffnet ein vorhandenes und nimmt die NC-Teileprogramme der zu schachtelnden Rohrteile in einem dritten Schritt **S3** in das geöffnete Produktionspaket auf. In einem vierten Schritt **S4** wird geprüft, ob das Produktionspaket alle gewünschten NC-Teileprogramme enthält. Ist das Ergebnis der Prüfung von Schritt S4 negativ (N), wird das Verfahren mit Schritt S3 fortgesetzt und ein weiteres NC-Teileprogramm in das Produktionspaket aufgenommen. Wenn das Ergebnis der Prüfung von Schritt S4 positiv (J) ist, wird in einem fünften Schritt **S5** geprüft, ob die NC-Teileprogramme und damit die Rohrteile in der gewünschten Reihenfolge angeordnet sind. Die zu schachtelnden Rohrteile sind in der Reihenfolge auf dem Rohr angeordnet, in der sie im Produktionspaket eingetragen sind. Ist das Ergebnis der Prüfung von Schritt S5 negativ (N), wird die Reihenfolge der Rohrteile in einem sechsten Schritt **S6** im Produktionspaket durch Umsortieren der NC-Teileprogramme durch den Programmierer geändert. Wenn das Ergebnis der Prüfung von Schritt S5 positiv (J) ist oder nach Schritt S6, wird in einem siebten Schritt **S7** die Schachtelung des Rohrteils zu dem vorher gehenden Rohrteil berechnet. Die Schachtelung wird durch eine Verschiebung des Rohrteils in Vorschubrichtung 11 (X-Versatz) und eine Verdrehung um die Drehachse 13 (A-Versatz) definiert. In einem achten Schritt **S8** wird geprüft, ob das Rohrteil in einer Stückzahl größer 1 gefertigt werden soll. Ist das Ergebnis der Prüfung von Schritt S8 positiv (J), wird in einem neunten Schritt **S9** die Schachtelung des Rohrteils zu dem gleichen Rohrteil berechnet. Wenn das Ergebnis der Prüfung von Schritt S8 negativ (N) ist oder nach Schritt S9, werden sämtliche Schachtelergebnisse aus Schritt S7 und ggf. aus Schritt S9 in einem zehnten Schritt **S10** gespeichert. In einem elften Schritt **S11** wird geprüft, ob hinter dem aktuellen Rohrteil ein weiteres Rohrteil angeordnet ist. Ist das Ergebnis der Prüfung von Schritt S11 positiv (J), wird das Verfahren mit Schritt S7 fortgesetzt und die Schachtelung des weiteren Rohrteils zu dem vorhergehenden Rohrteil berechnet. Wenn das Ergebnis der Prüfung von Schritt S11 negativ (N) ist, wird das Produktionspaket in einem zwölften Schritt **S12** als Komplettrohrbelegung gespeichert. Nach Schritt S12 ist das bekannte Verfahren zur Optimierung der Rohrbelegung beendet.

Alternativ wird die Rohrbelegung bei der bekannten Laserschneidanlage "TruLaser Tube" 1 nach dem Anlegen einer Auftragstabelle 49 mit Hilfe der FMC-Software 39 durchgeführt. Die Reihenfolge, in der die zu schneidenden Rohrteile auf dem Rohr angeordnet sind, wird mit einer von vier Belegungsarten festgelegt: "Feste Belegung", "Endlosbearbeitung", "Endlosbearbeitung mit Füllteil" und "Längstes Rohrteil zuerst", wobei Rohraufträge bei der Belegungsart "Feste Belegung" manuell durch den Maschinenbediener und bei den anderen Belegungsarten automatisch durch die FMC-Software 39 erstellt werden. Bei der Belegungsart "Feste Belegung" werden NC-Teileprogramme bzw. Rohrteile manuell aus der Programmverwaltung 41 auf das Rohr gelegt und als Rohrauftrag angelegt und gespeichert. Der Rohrauftrag wird so oft nacheinander abgearbeitet, bis die angegebene Stückzahl an Rohrteilen erreicht ist. Diese Belegungsart eignet sich vor allem, um Rohrteile baugruppenweise zu fertigen. Bei der Belegungsart "Endlosbearbeitung" werden alle Teileaufträge mit dem Status "frei" in der Reihenfolge ihrer Folgenummer zur automatischen Rohrbelegung herangezogen und auf dem Rohr hintereinander angeordnet. Teileaufträge mit dem Status "gesperrt" sind für die Rohrbelegung gesperrt und werden bei der automatischen Rohrbelegung nicht berücksichtigt. Sobald die Gesamtlänge des Rohrs überschritten ist, wird das letzte Rohrteil entfernt und die Reihenfolge der Rohrteile als Rohrauftrag gespeichert. Es werden so viele Rohraufträge angelegt, wie benötigt werden, um alle Teileaufträge mit dem Status "frei" abzuarbeiten. Bei der Belegungsart "Endlosbearbeitung mit Füllteil" erfolgt die Rohrbelegung zunächst analog zur "Endlosbearbeitung". Zur besseren Ausnutzung des Rohrs werden die Teileaufträge nach kurzen Rohrteilen durchsucht. Diese kurzen Rohrteile werden als Füllteile in die noch nutzbaren Bereiche auf dem Rohr gelegt, die bei der Belegungsart "Endlosbearbeitung" als Restrohre entstehen, wenn die Teileaufträge ausschließlich nach ihrer Folgenummer auf das Rohr gelegt werden. Bei der Belegungsart "Längstes Rohrteil zuerst" werden alle Teileaufträge mit dem Status "frei" sortiert nach der Rohrteillänge zur automatischen Rohrbelegung herangezogen. Die Rohrbelegung startet mit dem längsten Rohrteil, das solange aneinander gereiht wird, bis die erforderliche Stückzahl erreicht ist oder die Gesamtlänge des Rohrs überschritten wurde. Wenn die Stückzahl an längsten Rohrteilen erreicht ist, wird das nächst kürzere Rohrteil solange auf dem Rohr angeordnet, bis die erforderliche Stückzahl erreicht ist oder die Gesamtlänge des Rohrs überschritten wurde.

Mit dem bekannten Schachtelmodul "TubeLink" wird die Schachtelung von zwei auf dem Rohr nebeneinander liegenden Rohrteilen optimiert. Bei jeder der vier Belegungsarten erfolgt die Anordnung der Rohrteile nach der sogenannten Rechteckbelegung, bei der die Rohrteile in der Abwicklung als Rechtecke dargestellt sind, wobei die Rechteckseiten durch die äußeren Punkte der Anfangs- und Endgeometrien bestimmt sind.

Die Aufgabe der Erfindung besteht demgegenüber darin, ein Verfahren zur Optimierung der Belegung eines Rohrs oder mehrerer Rohrteile mit mehreren zu schneidenden Rohrteilen unter Berücksichtigung der tatsächlichen Rohrlänge noch weiter zu verbessern.

Diese Aufgabe wird erfindungsgemäß dadurch gelöst, dass die Länge des Rohrs oder der Rohre gemessen wird, dass vor der Längenmessung des Rohrs oder der Rohre für ein oder mehrere Rohrteile der Auftragstabelle eine Schachtelung des Rohrteils zu dem gleichen Rohrteil und/oder zu einem oder mehreren verschiedenen Rohrteilen der Auftragstabelle berechnet wird und nach der Längenmessung des Rohrs oder der Rohre verschiedene Rohrbelegungsvarianten mit den zu schneidenden Rohrteilen unter Berücksichtigung der zuvor berechneten Schachtelungen und der gemessenen Rohrlänge berechnet werden, und dass eine der berechneten Rohrbelegungsvarianten als "Beste Rohrbelegung" ausgewählt wird. Vorzugsweise wird von allen berechneten Rohrbelegungsvarianten diejenige Rohrbelegungsvariante, die die größte Rohrteilsumme aufweist, als "Beste Rohrbelegung" ausgewählt. Vorzugsweise wird von mehreren berechneten Rohrbelegungsvarianten mit der gleichen größten Rohrteilsumme diejenige Rohrbelegungsvariante, die die kleinste belegte Rohrlänge aufweist, als "Beste Rohrbelegung" ausgewählt, damit die verbleibende Restrohrlänge für eine mögliche weitere Bearbeitung möglichst maximal ist.

Bei der Schachtelung zweier Rohrteile werden die mögliche Verdrehung und/oder Verschiebung des einen Rohrteils relativ zu dem anderen Rohrteil berechnet. Ob und wie weit ein Rohrteil gedreht und/oder verschoben werden kann, legt der Programmierer beim Erstellen des NC-Teileprogramms über die Eigenschaften "drehbar um A-Versatz" und "verschiebbar um X-Versatz" fest. Die Eigenschaft "kippbar bzw. spiegelbar" gibt an, ob ein Rohrteil horizontal gekippt werden kann. Bei einem gekippten Rohrteil sind die Anfangs- und Endgeometrien gegenüber dem nicht-gekippten Rohrteil vertauscht und um 180° um die Drehachse 13 gedreht. Bei der Berechnung der Schachtelung zu einem Rohrteil, das kippbar ist, wird die mögliche Verdrehung und Verschiebung sowohl zu dem nicht-gekippten als auch zu dem gekippten Rohrteil berechnet.

Erfindungsgemäß wird die tatsächliche Rohrlänge eines Rohrs oder mehrerer Rohre bei der Optimierung der Rohrbelegung und bei der Festlegung der Reihenfolge der Rohrteile berücksichtigt.

Bevorzugt wird die Berechnung der Schachtelung für jedes Rohrteil der Auftragstabelle mit einem freigegebenen Teileauftrag durchgeführt. Insbesondere wird die Berechnung der Schachtelung zu dem gleichen Rohrteil und zu allen verschiedenen Rohrteilen der Auftragstabelle mit einem freigegebenen Teileauftrag und ggf. auch zu allen verschiedenen Rohrteilen der Auftragstabelle mit einem gesperrten Teileauftrag durchgeführt.

Vorteilhaft wird die Berechnung von Rohrbelegungsvarianten gestartet, sobald die gemessene Rohrlänge an eine Steuerungsvorrichtung der Laserschneidanlage übermittelt worden ist.

Die Berechnung von verschiedenen Rohrbelegungsvarianten wird vorteilhaft beendet, sobald das Rohr in einer Übergabeposition angeordnet und an eine Zuführvorrichtung der Laserschneidanlage übergeben worden oder sobald eine voreingestellte Zeit abgelaufen ist oder sobald das Rohr in einer Bearbeitungsposition angeordnet ist.

Die Erfindung betrifft schließlich auch ein Computerprogrammprodukt, welches Codemittel aufweist, die zum Durchführen aller Schritte des oben beschriebenen Optimierungsverfahrens angepasst sind, wenn das Programm auf einer Datenverarbeitungsanlage abläuft.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine bekannte Laserschneidanlage zum Schneiden von Rohren;
- Fig. 2: die numerische Steuerungsvorrichtung der in Fig. 1 gezeigten bekannten Laserschneidanlage;
- Fig. 3: die Beladevorrichtung der in Fig. 1 gezeigten bekannten Laserschneidanlage;
- Fig. 4: in Form eines Ablaufdiagramms die einzelnen Schritte des bekannten Verfahrens zur Optimierung der Belegung eines Rohrs mit mehreren zu schneidenden Rohrteilen;
- Fig. 5: in Form eines Ablaufdiagramms die einzelnen Schritte des erfindungsgemäßen Verfahrens zur Optimierung der Belegung eines Rohrs mit mehreren zu schneidenden Rohrteilen; und
- Fign. 6a-d: am Beispiel zweier unterschiedlich langer Rohrteile (Fig. 6a), wie erfindungsgemäß die vorbereitende Berechnung durchgeführt (Fig. 6b) und die "Beste Belegung" eines Rohrs ermittelt wird (Fign. 6c,d).

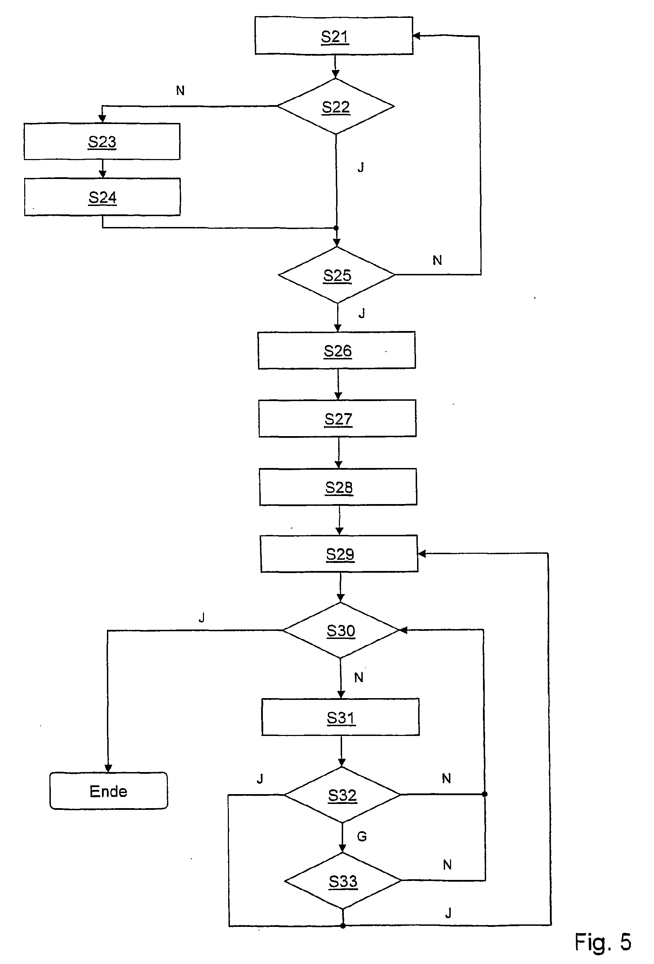

**Fig. 5** zeigt in Form eines Ablaufdiagramms die einzelnen Verfahrensschritte **S21 bis S33** des erfindungsgemäßen Verfahrens zur Optimierung der Belegung eines Rohrs mit mehreren zu schneidenden Rohrteilen. Das erfindungsgemäße Verfahren umfasst einen ersten Verfahrensabschnitt mit den Schritten S21 bis S25, eine Längenmessung des Rohrs (Schritte S26 und S27) und einen zweiten Verfahrensabschnitt mit den Schritten S28 bis S33. Der erste Verfahrensabschnitt wird vor der Längenmessung und der zweite Verfahrensabschnitt nach der Längenmessung des Rohrs durchgeführt.

In einem ersten Schritt **S21** wird in der Auftragstabelle 49 der FMC-Software 39 ein Teileauftrag für ein zu schneidendes Rohrteil angelegt und freigegeben, wobei in dem Teileauftrag neben dem Programmnamen des zugehörigen NC-Teileprogramms die Stückzahl an zu schneidenden Rohrteilen angegeben wird. Wenn die zur Erstellung eines Teileauftrags benötigten NC-Teileprogramme des Rohrteils nicht in der Programmverwaltung 41 des Steuerungscomputers 31 enthalten sind, werden die NC-Teileprogramme beim Anlegen des Teileauftrags in die Programmverwaltung 41 importiert. In einem zweiten Schritt **S22** wird geprüft, ob die Schachtelung dieses Rohrteils zu den anderen Rohrteilen der Auftragstabelle mit dem Status "frei" und zu dem gleichen Rohrteil durchgeführt wurde und die Schachtelergebnisse bereits vorliegen. Bei der Schachtelung zweier Rohrteile werden die mögliche Verdrehung (A-Versatz) und/oder Verschiebung (X-Versatz) des einen Rohrteils relativ zu dem anderen Rohrteil berechnet. Ob und wie weit ein Rohrteil gedreht und/oder verschoben werden kann, legt der Programmierer beim Erstellen des NC-Teileprogramms über die Eigenschaften "drehbar um A-Versatz" und "verschiebbar um X-Versatz" fest. Die Drehbarkeit ist bspw. bei Rohren mit einer Schweißnaht in Längsrichtung von Bedeutung. Wenn die Längsnaht bei allen geschnittenen Rohrteilen die gleiche Ausrichtung ausweisen soll, dürfen die Rohrteile bei der Rohrbelegung nicht gegeneinander verdreht werden und die Rohrteile sind nicht drehbar. Die Verschiebbarkeit ist bspw. bei Rohrteilen von Bedeutung, die im Bereich der Anfangs- und Endgeometrien hohe Anforderungen an die Oberflächenqualität stellen. Durch das Einstechen des Laserstrahls an der Anfangs- und Endgeometrie trifft ein Teil des Laserstrahls auf das Rohr, vor allem auf die gegenüberliegende Rohrinnenseite, und kann dort zu einer Verfärbung des Rohrteils führen. Ist eine Verfärbung des Rohrteils im Bereich der Anfangs- und Endgeometrien unerwünscht ist, darf das Rohrteil nicht oder nur in einem begrenzten Bereich verschoben werden. Die Schachtelung basiert auf der Abwicklung der dreidimensionalen Rohrteile mit den Anfangs- und Endgeometrien in die zweidimensionale Ebene. Wenn das Ergebnis der Prüfung des Schritts S22 negativ (N) ist und die Schachtelung des Rohrteils nicht oder nicht vollständig durchgeführt wurde, wird in einem dritten Schritt **S23** die Schachtelung des Rohrteils zu dem gleichen Rohrteil und zu allen freigegebenen Rohrteilen der Auftragstabelle berechnet, und die Schachtelergebnisse (X- und A-Versätze) werden in einem vierten Schritt **S24** gespeichert. Die Schritte S23 und S24 werden als vorbereitende Berechnung bezeichnet. Entweder nach Schritt S24 oder wenn das Ergebnis der Prüfung des Schritts S22 positiv (J) ist, wird in einem fünften Schritt **S25** geprüft, ob für alle zu schneidenden Rohrteile in der Auftragstabelle ein Teileauftrag angelegt und freigegeben wurde. Ist das Ergebnis der Prüfung des Schritts S25 negativ (N), wird der erste Verfahrensabschnitt mit Schritt S21 fortgesetzt und in der Auftragstabelle ein weiterer Teileauftrag für ein Rohrteil angelegt und freigegeben. Wenn das Ergebnis der Prüfung des Schritts S25 positiv (J) ist und für alle zu schneidenden Rohrteile in der Auftragstabelle ein Teileauftrag angelegt und freigegeben ist, ist der erste Verfahrensabschnitt des erfindungsgemäßen Verfahrens zur Optimierung der Rohrbelegung beendet.

In einem sechsten Schritt **S26** wird die Längenmessung des Rohrs durchgeführt und der Messwert für die Rohrlänge in einem siebten Schritt **S27** von der Messeinrichtung 85 an die Steuerungsvorrichtung 6 der Laserschneidanlage 1 übermittelt.

Der zweite Verfahrensabschnitt des erfindungsgemäßen Verfahrens startet, nachdem die Steuerungsvorrichtung 6 in Schritt S27 den Messwert für die Rohrlänge erhalten hat. In einem achten Schritt **S28** wird eine erste Rohrbelegungsvariante bestimmt, für die die Summe der Rohrteilelängen (Rohrteilsumme) und mit Hilfe der Schachtelergebnisse aus der vorbereitenden Berechnung (Schritte S23 und S24) des ersten Verfahrensabschnitts die belegte Rohrlänge berechnet werden. Die erste Rohrbelegungsvariante wird zusammen mit der Rohrteilsumme und der belegten Rohrlänge in einem neunten Schritt **S29** als "Beste Rohrbelegung" gespeichert. In einem zehnten Schritt **S30** wird geprüft, ob die Berechnung der Rohrbelegungsvarianten abgebrochen oder beendet wurde. Ist das Ergebnis der Prüfung des Schritts S30 positiv (J) und die Berechnung der Rohrbelegungsvarianten beendet, ist das erfindungsgemäße Verfahren zur Optimierung der Rohrbelegung beendet und die in Schritt S29 als "Beste Rohrbelegung" gespeicherte Rohrbelegungsvariante stellt das Ergebnis des Optimierungsverfahrens dar. Wenn das Ergebnis der Prüfung des Schritts S30 negativ (N) ist und die Berechnung weiterer Rohrbelegungsvarianten fortgesetzt wird, wird in einem elften Schritt **S31** eine weitere Rohrbelegungsvariante bestimmt, für die die Rohrteilsumme und mit Hilfe der Schachtelergebnisse des Schritts S23 die belegte Rohrlänge berechnet werden. Die Rohrteilsumme der weiteren Rohrbelegungsvariante wird in einem zwölften Schritt **S32** mit der in Schritt S29 gespeicherten Rohrteilsumme der "Besten Rohrbelegung" verglichen. Ist das Ergebnis des Vergleichs von Schritt S32 kleiner (N), also die Rohrteilsumme der weiteren Rohrbelegungsvariante kleiner als die Rohrteilsumme der "Besten Rohrbelegung", wird die weitere Rohrbelegungsvariante verworfen und das erfindungsgemäße Verfahren mit Schritt S30 fortgesetzt. Ist das Ergebnis des Vergleichs von Schritt S32 hingegen größer (J), also die Rohrteilsumme der weiteren Rohrbelegungsvariante größer als die Rohrteilsumme der "Besten Rohrbelegung", wird das erfindungsgemäße Verfahren mit Schritt S29 fortgesetzt und die weitere Rohrbelegungsvariante mit der Rohrteilsumme und der belegten Rohrlänge nunmehr als "Beste Rohrbelegung" gespeichert. Wenn das Ergebnis des Vergleichs des Schritts S32 gleich (G) ist, also die Rohrteilsumme der weiteren Rohrbelegungsvariante der Rohrteilsumme der "Besten Rohrbelegung" entspricht, wird in einem dreizehnten Schritt **S33** die in Schritt S31 berechnete belegte Rohrlänge mit der belegten Rohrlänge der "Besten Rohrbelegung" verglichen. Ist das Ergebnis des Vergleichs von Schritt S33 größer oder gleich (N) ist, wird die in Schritt S31 bestimmte Rohrbelegungsvariante verworfen und das erfindungsgemäße Verfahren mit Schritt S30 fortgesetzt. Ist das Ergebnis des Vergleichs des Schritts S33 kleiner (J), wird das Verfahren mit Schritt S29 fortgesetzt und die weitere Rohrbelegungsvariante mit der Rohrteilsumme und der belegten Rohrlänge nunmehr als "Beste Rohrbelegung" gespeichert. Die "Beste Rohrbelegung" zeichnet sich beispielsweise gegenüber allen anderen berechneten Rohrbelegungsvarianten dadurch aus, dass die Rohrteilsumme am größten und bei gleicher Rohrteilsumme die belegte Rohrlänge am kleinsten ist. Bei einer Optimierung der Rohrbelegungen für mehrere Rohre (rohrübergreifendes Optimierungsverfahren) ist es auch denkbar, dass bei einem Rohr gerade nicht die größte Rohrteilsumme als Kriterium für die "Beste Rohrbelegung" herangezogen wird, wenn ein Rohrteil besser auf einem anderen Rohr angeordnet werden kann.

Um die Zeit zur vorbereitenden Berechnung zu begrenzen, werden bei dem in Fig. 5 gezeigten erfindungsgemäßen Verfahren zur Optimierung der Rohrbelegung nur freigegebene Teileaufträge der Auftragstabelle herangezogen, also Teileaufträge, die den Status "frei" aufweisen. Wenn ausreichend Zeit zur vorbereitenden Berechnung zur Verfügung steht, kann neben den freigegebenen Teileaufträgen auch die Schachtelung eines Rohrteils zu den gesperrten Teileaufträgen berechnet werden, also Teileaufträgen mit dem Status "gesperrt". Möglich ist es auch, die Schachtelung eines Rohrteils zu dem gleichen Rohrteil und zu anderen Rohrteilen bereits beim Importieren des zugehörigen NC-Teileprogramms in die Programmverwaltung 41 zu berechnen. In diesem Fall können der erforderliche Zeitaufwand und Speicherbedarf drastisch ansteigen.

Ein Teileauftrag bezieht sich normalerweise auf ein einzelnes Rohrteil, das durch den zugehörigen NC-Teileprogrammnamen eindeutig gekennzeichnet ist. Wenn Rohrteile baugruppenweise hergestellt werden sollen, können die verschiedenen Rohrteile der Baugruppe zu einem Auftrag zusammengefasst werden. Der Auftrag umfasst in diesem Fall sämtliche NC-Teileprogramme der einzelnen Rohrteile.

Teileaufträge für Rohrteile müssen nicht in der FMC-Software 39 angelegt werden, sondern können außerhalb der FMC-Software 39 in einem Programmiersystem erstellt werden. Anschließend wird die Auftragstabelle zusammen mit den NC-Teileprogrammen in die FMC-Software 39 importiert. Die Berechnung der Schachtelungen der Rohrteile zueinander kann ebenfalls in dem Programmiersystem durchgeführt werden. Die Schachtelergebnisse werden dann zusammen mit der Auftragstabelle in die FMC-Software 39 importiert.

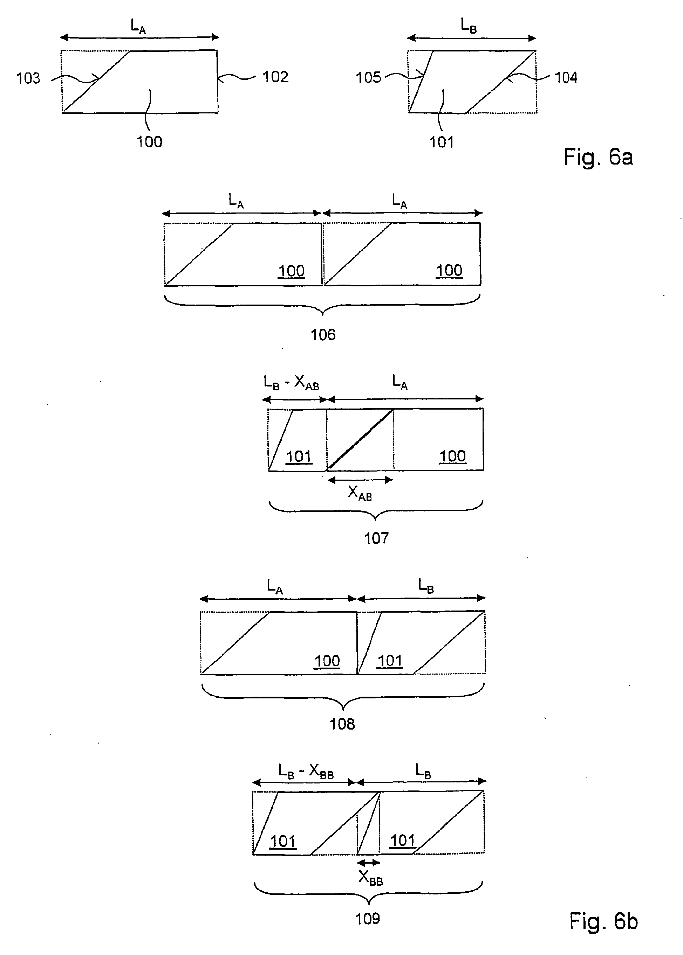

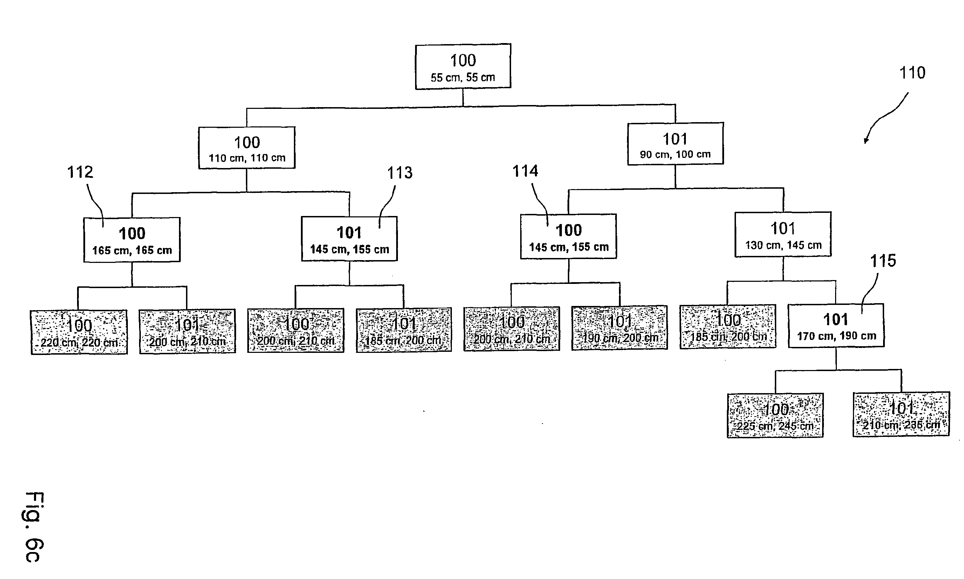

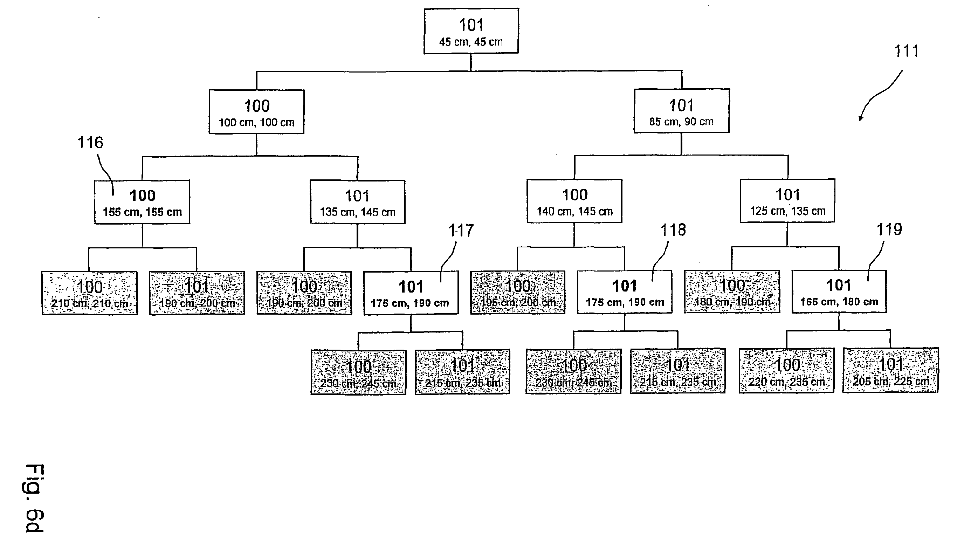

**Fign. 6a****-d** zeigen am Beispiel eines längeren ersten Rohrteils **100** der Länge L_{A} = 55 cm und eines kürzeren zweiten Rohrteils **101** der Länge L_{B} = 45 cm, wie der Schritt S23 der vorbereitenden Berechnung des ersten Verfahrensabschnitts (Fig. 6b) und die Schritt S28 bis S33 des zweiten Verfahrensabschnitts (Fig. 6c,d) des erfindungsgemäßen Optimierungsverfahrens zur Rohrbelegung durchgeführt werden. Die Rohrteile 100, 101 sollen jeweils in einer Stückzahl 4 hergestellt werden. Die gemessene Rohrlänge beträgt 185 cm und der Totbereich der Spanneinrichtung 12 beträgt 10 cm.

Fig. 6a zeigt die Rohrteile 100, 101 mit ihren Anfangs- und Endgeometrien. Das erste Rohrteil 100 weist an der Anfangsgeometrie **102** einen 90°-Trennschnitt und an der Endgeometrie **103** einen 45°-Trennschnitt auf, während das zweite Rohrteil 101 an der Anfangsgeometrie **104** einen 45°-Trennschnitt und an der Endgeometrie **105** einen 63°-Trennschnitt aufweist. Da die Endgeometrien 103, 105 der beiden Rohrteile 100, 101 einen Schrägschnitt ungleich 90° darstellen, sind beide Rohrteile 100, 101 nicht "zuschnittfähig". Ein Rohrteil wird als zuschnittfähig definiert, wenn im Totbereich der Spanneinrichtung 12 kein Konturschnitt vorliegt und die Endgeometrie des Rohrteils einen 90°-Trennschnitt darstellt und mit dem Rohrende übereinstimmt.

Fig. 6b zeigt untereinander die vier verschiedenen Anordnungen **106 bis 109** der beiden Rohrteile 100, 101: Anordnung 106 zeigt zwei längere Rohrteile 100, Anordnung 107 ein längeres 100 und ein kürzeres Rohrteil 101, Anordnung 108 ein kürzeres 101 und ein längeres Rohrteil 100 und Anordnung 109 zwei kürzere Rohrteile 101. Im Rahmen der vorbereitenden Berechnung (Schritte S23 und S24) werden die möglichen Verschiebungen und/oder Verdrehungen zwischen den Rohrteilen 100, 101 berechnet. Bei einem Rohrdurchmesser von 10 cm ergeben sich folgende Verschiebungen: X_{AA} = 0 cm, X_{AB} = 10 cm, X_{BA} = 0 cm und X_{BB} = 5 cm. Wird ein erstes Rohrteil 100 hinter einem ersten oder zweiten Rohrteil 100, 101 angeordnet (Anordnungen 106, 108), ist wegen des 90°-Trennschnitts als Anfangsgeometrie 102 keine Verschiebung möglich (X_{AA} = X_{BA} = 0 cm) und die belegte Rohrteillänge des Rohrteils 100 kann nicht reduziert werden. Wird ein zweites Rohrteil 101 hinter einem ersten Rohrteil 100 angeordnet (Anordnung 107), reduziert sich die belegte Rohrteillänge des zweiten Rohrteils 101 um X_{AB} = 10 cm auf 35 cm. Für den Fall, dass zwei kürzere Rohrteile 101 hintereinander angeordnet werden (Anordnung 109), reduziert sich die belegte Rohrteillänge des zweiten Rohrteils 101 um X_{BB} = 5 cm auf 40 cm.

Fign. 6c,d zeigen anhand von Baumstrukturen **110, 111,** wie die Rohrbelegungsvarianten für die Schritte S28 und S31 ermittelt werden, wobei Fig. 6c die Rohrbelegungsvarianten ausgehend von dem längeren ersten Rohrteil 100 und Fig. 6d die Rohrbelegungsvarianten ausgehend von dem kürzeren zweiten Rohrteil 101 zeigt. Rohrbelegungsvarianten, bei denen die belegte Rohrlänge die gemessene Gesamtlänge des Rohrs überschreitet, sind grau hinterlegt, alle weiß hinterlegten Rohrbelegungsvarianten stellen eine mögliche Rohrbelegungsvariante dar. Bei der Prüfung, ob eine Rohrbelegungsvariante möglich ist, muss der Totbereich der Spanneinrichtung 12 berücksichtigt werden. Zunächst wird geprüft, ob die belegte Rohrlänge einer Rohrbelegungsvariante kleiner oder gleich der um den Totbereich reduzierten gemessenen Rohrlänge (reduzierte Rohrlänge) ist. Ist das Ergebnis der Prüfung negativ, wird für den Fall, dass das letzte Rohrteil ein zuschnittfähiges Rohrteil ist, geprüft, ob die belegte Rohrlänge kleiner oder gleich der gemessenen Rohrlänge ist. Ein Rohrteil ist zuschnittfähig, wenn im Totbereich der Spanneinrichtung 12 kein Konturschnitt vorliegt und die Endgeometrie des Rohrteils einen 90°-Trennschnitt darstellt und mit dem Rohrende übereinstimmt. Die Eigenschaft "zuschnittfähig" legt der Programmierer beim Erstellen des NC-Teileprogramms fest.

Zur Ermittlung einer ersten Rohrbelegungsvariante für Schritt S28 wird das längere Rohrteil 100 solange aneinander gereiht, bis die gewünschte Stückzahl des Rohrteils 100 auf dem Rohr angeordnet ist oder die reduzierte Rohrlänge des Rohrs überschritten wird. Bei einer reduzierten Rohrlänge von 175 cm können drei längere Rohrteile 100 hintereinander angeordnet werden, beim vierten Rohrteil 100 ergibt sich eine belegte Rohrlänge von 220 cm, so dass die reduzierte Rohrlänge überschritten wird. Das vierte längere Rohrteil 100 wird entfernt und an dessen Stelle ein kürzeres Rohrteil 101 angefügt. Da auch diese Rohrbelegungsvariante die reduzierte Rohrlänge des Rohrs überschreitet und das Rohrteil 101 nicht zuschnittfähig ist, ist die Rohrbelegungsvariante **112** mit drei längeren Rohrteilen 100 die erste Rohrbelegungsvariante, die in Schritt S28 verwendet wird. Um weitere Rohrbelegungsvarianten für Schritt S31 zu bestimmen, wird das dritte längere Rohrteil 100 in der Rohrbelegungsvariante **113** durch ein kürzeres Rohrteil 101 ersetzt, wodurch sich eine belegte Rohrlänge von 145 cm ergibt. Ordnet man ein erstes Rohrteil 100 oder ein zweites Rohrteil 101 dahinter an, ergeben sich belegte Rohrlängen von 200 cm bzw. 185 cm, die die reduzierte Rohrlänge von 175 cm überschreiten. Nachdem alle möglichen Rohrbelegungsvarianten 112, 113 mit zwei Rohrteilen 100 ermittelt worden sind, wird das zweite längere Rohrteil 100 durch ein kürzeres Rohrteil 101 ersetzt. Anschließend wird die Baumstruktur 110 durch Hinzufügen der Rohrteile 100, 101 ergänzt und es ergeben sich weitere Rohrbelegungsvarianten **114, 115.** Nachdem in Fig. 6c alle möglichen Rohrbelegungsvarianten 112 bis 115 berechnet wurden, die von dem längeren ersten Rohrteil 100 ausgehen, werden in Fig. 6d alle Rohrbelegungsvarianten **116 bis 119** ausgehend von dem kürzeren zweiten Rohrteil 101 bestimmt. Die Baumstrukturen 110, 111 machen es möglich, dass nur die letzte mögliche Rohrbelegungsvariante eines Astes in Schritt S31 als weitere Rohrbelegungsvariante herangezogen und in Schritt S32 (Rohrteilsumme) und in Schritt S33 (Belegte Rohrlänge) mit der Besten Rohrbelegung verglichen werden muss, da die darüber angeordneten Rohrbelegungsvarianten des Astes eine kleinere Rohrteilsumme aufweisen.

Als Beste Rohrbelegung ergibt sich für das Beispiel von Fign. 6a-d die Rohrbelegungsvariante 115 bestehend aus einem längeren ersten Rohrteil 100 und drei kürzeren zweiten Rohrteilen 101 mit einer Rohrteilsumme von 190 cm und einer belegten Rohrlänge von 170 cm. Die weiteren Rohrbelegungsvarianten bestehend aus einem längeren Rohrteil 100 und drei kürzeren Rohrteilen 101, bei denen das längere Rohrteil 100 an zweiter, dritter oder vierter Position angeordnet ist, weisen die gleiche Rohrteilsumme von 190 cm auf. Die Rohrbelegungsvarianten, bei denen das längere erste Rohrteil 100 an zweiter Position (Rohrbelegungsvariante 117) bzw. dritter Position (Rohrbelegungsvariante 118) angeordnet ist, weisen eine belegte Rohrlänge von jeweils 175 cm auf und sind damit größer als die belegte Rohrlänge der Besten Rohrbelegung. Die "Beste Rohrbelegung" zeichnet sich dadurch aus, dass die Rohrteilsumme am größten und bei gleicher Rohrteilsumme die belegte Rohrlänge möglichst klein ist. Die Rohrbelegungsvariante, bei der das längere erste Rohrteil 100 an vierter Position angeordnet ist, stellt keine mögliche Rohrbelegungsvariante dar, da die belegte Rohrlänge mit 180 cm größer als die reduzierte Rohrlänge von 175 cm ist und das letzte Rohrteil 100 nicht zuschnittfähig ist.

## Patentansprüche

1. Verfahren zur Optimierung der Belegung eines Rohrs oder mehrerer Rohre (2) mit mehreren zu schneidenden Rohrteilen (100, 101) für eine Laserschneidanlage (1), wobei die zu schneidenden Rohrteile (100, 101) aus einer Auftragstabelle (49) ausgewählt werden,
**dadurch gekennzeichnet,**
**dass** die Länge des Rohrs oder der Rohre (2) gemessen wird,
**dass** vor der Längenmessung des Rohrs oder der Rohre (2) für ein oder mehrere Rohrteile der Auftragstabelle (49) eine Schachtelung des Rohrteils (100, 101) zu dem gleichen Rohrteil (100, 101) und/oder zu einem oder mehreren verschiedenen Rohrteilen (101, 100) der Auftragstabelle (49) berechnet wird und nach der Längenmessung des Rohrs oder der Rohre (2) verschiedene Rohrbelegungsvarianten (112-119) mit den zu schneidenden Rohrteilen (100, 101) unter Berücksichtigung der zuvor berechneten Schachtelungen und der gemessenen Rohrlänge berechnet werden,
und **dass** eine der berechneten Rohrbelegungsvarianten (115) als "Beste Rohrbelegung" ausgewählt wird.

2. Verfahren nach Anspruch 1, **dadurch gekennzeichnet, dass** von allen berechneten Rohrbelegungsvarianten diejenige Rohrbelegungsvariante (115, 117, 118), die die größte Rohrteilsumme aufweist, als "Beste Rohrbelegung" ausgewählt wird.

3. Verfahren nach Anspruch 2, **dadurch gekennzeichnet, dass** von mehreren berechneten Rohrbelegungsvarianten (115, 117, 118) mit der gleichen größten Rohrteilsumme diejenige Rohrbelegungsvariante (115), die die kleinste belegte Rohrlänge aufweist, als "Beste Rohrbelegung" ausgewählt wird.

4. Verfahren nach einem der vorhergehenden Ansprüche, **dadurch gekennzeichnet, dass** die Berechnung der Schachtelung für jedes Rohrteil (100, 101) der Auftragstabelle (49) mit einem freigegebenen Teileauftrag durchgeführt wird.

5. Verfahren nach Anspruch 4, **dadurch gekennzeichnet, dass** die Berechnung der Schachtelung zu dem gleichen Rohrteil (100, 101) und zu allen verschiedenen Rohrteilen (101, 100) der Auftragstabelle (49) mit einem freigegebenen Teileauftrag durchgeführt wird.

6. Verfahren nach Anspruch 5, **dadurch gekennzeichnet, dass** die Berechnung der Schachtelung auch zu allen verschiedenen Rohrteilen (101, 100) der Auftragstabelle (49) mit einem gesperrten Teileauftrag durchgeführt wird.

7. Verfahren nach einem der vorhergehenden Ansprüche, **dadurch gekennzeichnet, dass** die Berechnung von Rohrbelegungsvarianten (112-119) gestartet wird, sobald die gemessene Rohrlänge an eine Steuerungsvorrichtung (6) der Laserschneidanlage (1) übermittelt worden ist.

8. Verfahren nach einem der Ansprüche 1 bis 7, **dadurch gekennzeichnet, dass** die Berechnung von Rohrbelegungsvarianten beendet wird, sobald das Rohr (2) in einer Übergabeposition (86) angeordnet und an eine Zuführvorrichtung (3) der Laserschneidanlage (1) übergeben worden ist.

9. Verfahren nach einem der Ansprüche 1 bis 7, **dadurch gekennzeichnet, dass** die Berechnung von Rohrbelegungsvarianten (112-119) nach einer voreingestellten Zeit beendet wird.

10. Verfahren nach einem der Ansprüche 1 bis 7, **dadurch gekennzeichnet, dass** die Berechnung von Rohrbelegungsvarianten (112-119) beendet wird, sobald das Rohr (2) in einer Bearbeitungsposition (92) angeordnet.

11. Verfahren nach einem der Ansprüche 1 bis 10, **dadurch gekennzeichnet, dass** nach Einlasten (S21) eines Teileauftrags für ein Rohrteil (100, 101) in die Auftragstabelle (49) die Schachtelung des Rohrteils zu dem gleichen Rohrteil und zu allen verschiedenen Rohrteilen der Auftragstabelle (49) berechnet wird (S23).

12. Verfahren nach einem der Ansprüche 1 bis 10, **dadurch gekennzeichnet, dass** nach Freigabe eines Teileauftrags für ein Rohrteil die Schachtelung des Rohrteils zu dem gleichen Rohrteil und zu allen verschiedenen, insbesondere zu allen freigegebenen, Rohrteilen der Auftragstabelle (49) berechnet wird.

13. Verfahren nach einem der Ansprüche 1 bis 10, **dadurch gekennzeichnet, dass** die Berechnung der Schachtelung des Rohrteils zu dem gleichen Rohrteil und zu allen verschiedenen Rohrteilen der Auftragstabelle (49) durch den Maschinenbediener gestartet wird.

14. Verfahren nach einem der Ansprüche 1 bis 13, **dadurch gekennzeichnet, dass** die berechneten Schachtelungen eines Rohrteils gelöscht werden, sobald das zugehörige NC-Teileprogramm des Rohrteils aus der Programmverwaltung gelöscht wurde.

15. Verfahren nach einem der Ansprüche 1 bis 13, **dadurch gekennzeichnet, dass** die berechneten Schachtelungen eines Rohrteils gelöscht werden, sobald der zugehörige Teileauftrag des Rohrteils in der Auftragstabelle (49) gelöscht wurde.

16. Computerprogrammprodukt, welches Codemittel aufweist, die zum Durchführen aller Schritte des Verfahrens zur Optimierung der Belegung eines Rohrs oder mehrerer Rohre (2) mit mehreren zu schneidenden Rohrteilen für eine Laserschneidanlage (1) nach einem der Ansprüche 1 bis 15 angepasst sind, wenn das Programm auf einer Datenverarbeitungsanlage abläuft.

## Claims

1. Method for optimising the configuration of a pipe or a plurality of pipes (2) having a plurality of pipe portions (100, 101) to be cut for a laser cutting installation (1),
the pipe portions (100, 101) to be cut being selected from an assignment table (49),
**characterised in that**
the length of the pipe or pipes (2) is measured,
**in that**, before the length measurement of the pipe or pipes (2) for one or more pipe portions of the assignment table (49), a nesting of the pipe portion (100, 101) with respect to the same pipe portion (100, 101) and/or to one or more different pipe portions (101, 100) of the assignment table (49) is calculated and, in accordance with the length measurement of the pipe or pipes (2), different pipe configuration variants (112-119) with the pipe portions (100, 101) to be cut are calculated taking into account the previously calculated nestings and the measured pipe length, and **in that** one of the calculated pipe configuration variants (115) is selected as the "best pipe configuration".

2. Method according to claim 1, **characterised in that**, from all the calculated pipe configuration variants, the pipe configuration variant (115, 117, 118) which has the greatest sum of pipe portions is selected as the "best pipe configuration".

3. Method according to claim 2, **characterised in that**, from a plurality of calculated pipe configuration variants (115, 117, 118) having the same greatest sum of pipe portions, the pipe configuration variant (115) which has the smallest configured pipe length is selected as the "best pipe configuration".

4. Method according to any one of the preceding claims, **characterised in that** the calculation of the nesting for each pipe portion (100, 101) of the assignment table (49) is carried out with a released component assignment.

5. Method according to claim 4, **characterised in that** the calculation of the nesting with respect to the same pipe portion (100, 101) and to all the different pipe portions (101, 100) of the assignment table (49) is carried out with a released component assignment.

6. Method according to claim 5, **characterised in that** the calculation of the nesting with respect to all the different pipe portions (101, 100) of the assignment table (49) is also carried out with a blocked component assignment.

7. Method according to any one of the preceding claims, **characterised in that** the calculation of pipe configuration variants (112-119) is started as soon as the measured pipe length has been transmitted to a control device (6) of the laser cutting installation (1).

8. Method according to any one of claims 1 to 7, **characterised in that** the calculation of pipe configuration variants is ended as soon as the pipe (2) is arranged in a transfer position (86) and has been transferred to a supply device (3) of the laser cutting installation (1).

9. Method according to any one of claims 1 to 7, **characterised in that** the calculation of pipe configuration variants (112-119) is ended after a preset period of time.

10. Method according to any one of claims 1 to 7, **characterised in that** the calculation of pipe configuration variants (112-119) is ended as soon as the pipe (2) is arranged in a processing position (92).

11. Method according to any one of claims 1 to 10, **characterised in that**, after despatch (S21) of a component assignment for a pipe portion (100, 101) to the assignment table (49), the nesting of the pipe portion with respect to the same pipe portion and to all the different pipe portions of the assignment table (49) is calculated (S23).

12. Method according to any one of claims 1 to 10, **characterised in that**, after release of a component assignment for a pipe portion, the nesting of the pipe portion with respect to the same pipe portion and to all the different, in particular all the released, pipe portions of the assignment table (49) is calculated.

13. Method according to any one of claims 1 to 10, **characterised in that** the calculation of the nesting of the pipe portion with respect to the same pipe portion and to all the different pipe portions of the assignment table (49) is started by the machine operator.

14. Method according to any one of claims 1 to 13, **characterised in that** the calculated nestings of a pipe portion are deleted as soon as the associated NC component programme of the pipe portion has been deleted from the programme administration.

15. Method according to any one of claims 1 to 13, **characterised in that** the calculated nestings of a pipe portion are deleted as soon as the associated component assignment of the pipe portion in the assignment table (49) has been deleted.

16. Computer programme product which has encoding means which are suitable for carrying out all the steps of the method for optimising the configuration of a pipe or a plurality of pipes (2) with a plurality of pipe portions to be cut for a laser cutting installation (1) according to any one of claims 1 to 15, when the programme is carried out on a data processing system.

## Revendications

1. Procédé d'optimisation du fractionnement d'un tube ou de plusieurs tubes (2) en plusieurs parties tubulaires à découper (100, 101) pour une installation de découpage au laser (1), les parties tubulaires à découper (100, 101) étant sélectionnées dans un tableau de commandes (49),
**caractérisé en ce que** la longueur du tube ou des tubes (2) est mesurée,
qu'avant la mesure de longueur du tube ou des tubes (2), une imbrication de la partie tubulaire (100, 101) avec la même partie tubulaire (100, 101) et/ou avec une ou plusieurs parties tubulaires (100, 101) différentes du tableau de commandes (49) est calculée pour une ou plusieurs parties tubulaires du tableau de commandes (49) et qu'après la mesure de longueur du tube ou des tubes (2), différentes variantes de fractionnement de tube (112-119) en parties tubulaires (100, 101) à découper sont calculées en tenant compte des imbrications précédemment calculées et de la longueur de tube mesurée,
et qu'une des variantes de fractionnement de tube (115) calculée est choisie comme « fractionnement de tube optimal ».

2. Procédé selon la revendication 1, **caractérisé en ce que**, de toutes les variantes de fractionnement de tube calculée, la variante de fractionnement de tube (115, 117, 118) qui présente la plus grande somme de parties tubulaires est choisie comme « fractionnement de tube optimal ».

3. Procédé selon la revendication 2, **caractérisé en ce que**, de plusieurs variantes de fractionnement de tube (115, 117, 118) calculées ayant la même plus grande somme de parties tubulaires, la variante de fractionnement de tube (115) qui présente la plus petite longueur de tube fractionnée est choisie comme « fractionnement de tube optimal ».

4. Procédé selon une des revendications précédentes, **caractérisé en ce que** l'imbrication est calculée pour chaque partie tubulaire (100, 101) du tableau de commandes (49) ayant une commande de pièce approuvée.

5. Procédé selon la revendication 4, **caractérisé en ce que** l'imbrication est calculée avec la même partie tubulaire (100, 101) et avec toutes les parties tubulaires (101, 100) différentes du tableau de commandes (49) ayant une commande de pièce approuvée.

6. Procédé selon la revendication 5, **caractérisé en ce que** l'imbrication est calculée aussi avec toutes les parties tubulaires (101, 100) différentes du tableau de commandes (49) ayant une commande de pièce bloquée.

7. Procédé selon une des revendications précédentes, **caractérisé en ce que** le calcul de variantes de fractionnement de tube (112-119) est démarré dès que la longueur de tube mesurée a été transmise à un dispositif de commande (6) de l'installation de découpe au laser (1).

8. Procédé selon une des revendications 1 à 7, **caractérisé en ce que** le calcul de variantes de fractionnement de tube est terminé dès que le tube (2) a été disposé dans une position de transfert (86) et transmis à un dispositif d'amenée (3) de l'installation de découpe au laser (1).

9. Procédé selon une des revendications 1 à 7, **caractérisé en ce que** le calcul de variantes de fractionnement de tube (112-119) est terminé après un temps préréglé.

10. Procédé selon une des revendications 1 à 7, **caractérisé en ce que** le calcul de variantes de fractionnement de tube (112-119) est terminé dès que le tube (2) est disposé dans une position d'usinage (92).

11. Procédé selon une des revendications 1 à 10, **caractérisé en ce qu'**après chargement (S21) d'une commande de pièce pour une partie tubulaire (100, 101) dans le tableau de commandes (49), l'imbrication de la partie tubulaire avec la même partie tubulaire et avec toutes les parties tubulaires différentes du tableau de commandes (49) est calculée (S23).

12. Procédé selon une des revendications 1 à 10, **caractérisé en ce qu'**après approbation d'une commande de pièce pour une partie tubulaire, l'imbrication de la partie tubulaire avec la même partie tubulaire et avec toutes les parties tubulaires différentes, en particulier approuvées, du tableau de commandes (49) est calculée.

13. Procédé selon une des revendications 1 à 10, **caractérisé en ce que** le calcul de l'imbrication de la partie tubulaire avec la même partie tubulaire et avec toutes les parties tubulaires différentes du tableau de commandes (49) est démarré par l'opérateur de la machine.

14. Procédé selon une des revendications 1 à 13, **caractérisé en ce que** les imbrications calculées d'une partie tubulaire sont supprimées dès que le programme de pièce NC associé de la partie tubulaire a été supprimé de la gestion des programmes.

15. Procédé selon une des revendications 1 à 13, **caractérisé en ce que** les imbrications calculées d'une partie tubulaire sont supprimées dès que la commande de pièce associée de la partie tubulaire a été supprimée dans le tableau de commandes (49).

16. Produit programme d'ordinateur qui présente des moyens de codage qui ont adaptés à l'exécution de toutes les étapes du procédé d'optimisation du fractionnement d'un tube ou de plusieurs tubes (2) en plusieurs parties tubulaires à découper pour une installation de découpe au laser (1) selon une des revendications 1 à 15 quand le programme s'exécute sur un système de traitement de données.
